# EUROPÄISCHE PATENTSCHRIFT

(11) **EP 4 366 964 B1**
(45) Veröffentlichungstag und Bekanntmachung des Hinweises auf die Patenterteilung: **02.12.2026**
(21) Anmeldenummer: 22732223.7
(22) Anmeldetag: 09.06.2022
(51) Int. Cl.: B60H 1/32, F25B 5/02, F25B 40/00, F25B 41/20, F25B 41/42

(54) **KÄLTEKREISLAUF SOWIE WÄRMEMANAGEMENTSYSTEM UND KRAFTFAHRZEUG MIT EINEM SOLCHEN**
REFRIGERATION CIRCUIT AND THERMAL MANAGEMENT SYSTEM AND MOTOR VEHICLE EQUIPPED WITH SUCH A SYSTEM
CIRCUIT DE RÉFRIGÉRATION AINSI QUE SYSTÈME DE GESTION DE LA CHALEUR ET VÉHICULE AUTOMOBILE ÉQUIPÉ D'UN TEL SYSTÈME

(30) Priorität: 09.07.2021 DE 102021117787
(43) Veröffentlichungstag der Anmeldung: 15.05.2024
(73) Patentinhaber: Bayerische Motoren Werke Aktiengesellschaft, 80809 München (DE)
(72) Erfinder: HORN, Oliver, 81475 Muenchen (DE); ALLGÄUER, Christian, 81825 München (DE); MARINELL, Patrick, 81245 München (DE); FRANK, Torsten, 85591 Vatterstetten (DE); LADE, Irina, 85375 Neufahrn bei Freising (DE); MOSER, Markus, 85764 Oberschleißheim (DE)
(86) Internationale Anmeldenummer: PCT/EP2022/065709
(87) Internationale Veröffentlichungsnummer: WO 2023/280507

(56) Entgegenhaltungen:
- EP-A1- 3 315 940
- DE-A1- 102011 118 162
- DE-A1- 102017 201 686

## Beschreibung

Die Erfindung betrifft einen Kältekreislauf, insbesondere für elektrifizierte Kraftfahrzeuge, d.h. für zumindest zeitweise elektrisch angetriebe Kraftfahrzeuge. Darüber hinaus betrifft die Erfindung ein Wärmemanagementsystem mit solch einem Kältekreislauf sowie ein Kraftfahrzeug mit solch einem Kältekreislauf.

Aus dem Stand der Technik, wie beispielsweise der DE 10 2019 107 191 A1, DE 10 2011 118 162 A1 oder der DE 10 2019 120 229 A1 sind Wärmemanagementsysteme mit Kältekreisläufen bekannt. Bei derartigen System sind jedoch elektrische Heizer zum Beheizen des Fahrzeuginsassenraums erforderlich, um bei kalten Umgebungsbedingungen und bei wenig zur Verfügung stehender Abwärme, ein ausreichend schnelles Beheizen zu ermöglichen. Solche elektrischen Heizer verbrauchen elektrische Energie, was sich negativ auf eine Energieeffizienz des elektrifizierten Kraftfahrzeugs auswirkt.

Es ist daher eine Aufgabe der vorliegenden Erfindung die vorstehend genannten Nachteile zumindest teilweise zu beseitigen. Diese Aufgabe wird durch einen Kältekreislauf gemäß Anspruch 1, ein Wärmemanagementsystem gemäß Anspruch 8, ein Kraftfahrzeug gemäß Anspruch 9, ein Verfahren gemäß Anspruch 10 sowie ein Verfahren gemäß Anspruch 11 gelöst. Vorteilhafte Weiterbildungen der Erfindung sind Gegenstand der abhängigen Ansprüche.

Gemäß einem Ausführungsbeispiel der Erfindung wird ein Kältekreislauf, insbesondere für ein Kraftfahrzeug, bereitgestellt, mit einem Kältemittelverdichter, einem Kondensator, insbesondere einem wassergekühlten Kondensator, zur Wärmeübertragung mit einem Kühlkreislauf; einem Chiller zur Wärmeübertragung mit dem Kühlkreislauf; einem Verdampfer zum Temperieren, insbesondere zum Kühlen, von Luft in einem Klimagerät, wobei der Verdampfer parallel zu dem Chiller angeordnet ist, wobei in einem Hauptkreislauf der Kältemittelverdichter, der Kondensator und die Parallelschaltung aus Chiller und Verdampfer in Reihe geschaltet sind, insbesondere in Strömungsrichtung des Kältemittels in dieser Reihenfolge in Reihe geschaltet sind; einer Rückführleitung, die auf einer Hochdruckseite des Kältemittelverdichters vom Hauptkreislauf abzweigt und auf einer Niederdruckseite des Kältemittelverdichters in den Hauptkreislauf mündet, und einer Ventilschaltung, welche angepasst ist, eine Durchströmung der Rückführleitung zumindest zu sperren und freizugeben. Insbesondere ist die Ventilschaltung angepasst, eine Durchströmung der Rückführleitung zu sperren, teilweise freizugeben und vollständig freizugeben. Dabei fungiert die Ventilschaltung in einem Zustand, in dem es die Durchströmung durch die Rückführleitung teilweise freigibt, als ein Expansionsorgan.

Dieses Ausführungsbeispiel bietet den Vorteil, dass durch die Rückführleitung ein Kurzschluss-Kreislauf geschaffen wird, über den durch den Antrieb des Kältemittelverdichters Wärmeenergie zugeführt wird, während wenig oder keine Wärmeenergie im Hauptkreislauf abgeführt wird, so dass der Kältekreislauf schneller aufstartet und in kürzerer Zeit eine höhere Heizleistung bereitstellen kann. Durch dieses schnellere Aufstarten des Kältekreislaufs kann ggf. auf einen elektrischen Heizer verzichtet werden oder ein elektrischer Heizer mit geringerer Leistung verwendet werden. Neben dem schnelleren Aufstarten, hat das Ausführungsbeispiel vor allem den Vorteil, dass die in den Kältekreislauf über den Kältemittelverdichter eingespeiste elektrische Leistung zum Heizen am Heizkondensator genutzt werden kann und so der Kältekreislauf bei Defiziten in Wärmequellen, deren Wärme im Stand der Technik über den Chiller in den Kältekreislauf eingespeist wird, ohne einen weiteren kostenaufwendigen elektrischen Heizer betrieben werden kann.

Die Hochdruckseite des Kältemittelverdichters ist im Rahmen dieser Erfindung insbesondere definiert als der Bereich im Kältekreislauf, der sich von einem Ausgang des Kältemittelverdichters in Strömungsrichtung des Kältemittels bis zu Expansionsorganen des Kältekreislaufs erstreckt, diese Expansionsorgane sind insbesondere ein Verdampfer-Ventil, welches dem Verdampfer vorgeschaltet ist und ein Chiller-Ventil, welches dem Chiller vorgeschaltet ist.

Die Niederdruckseite des Kältemittelverdichters ist im Rahmen dieser Erfindung insbesondere definiert als der Bereich im Kältekreislauf, der sich von einem Eingang des Kältemittelverdichters entgegen der Strömungsrichtung des Kältemittels bis zu Expansionsorganen des Kältekreislaufs erstreckt, diese Expansionsorgane sind insbesondere das Verdampfer-Ventil, welches dem Verdampfer vorgeschaltet ist und das Chiller-Ventil, welches dem Chiller vorgeschaltet ist.

Insbesondere ist der Verdampfer in einer Luftführung angeordnet, über welche Luft in einen Fahrzeuginnenraum zuführbar ist, so dass der Verdampfer angepasst ist, die dem Fahrzeuginnenraum zuführbare Luft zu temperieren, insbesondere zu kühlen. Insbesondere zweigt die Rückführleitung stromabwärts des Kältemittelverdichters und stromaufwärts des Kondensators vom Hauptkreislauf ab.

Gemäß der Erfindung wird ein Kältekreislauf bereitgestellt, ferner mit einem Heizkondensator zum Temperieren von Luft in dem Klimagerät, wobei in dem Hauptkreislauf der Kältemittelverdichter, der Heizkondensator, der Kondensator und die Parallelschaltung aus Chiller und Verdampfer in Reihe geschaltet sind, insbesondere in Strömungsrichtung des Kältemittels in dieser Reihenfolge in Reihe geschaltet sind. Durch diesen Heizkondensator kann die Wärmeenergie im Kältekreislauf, insbesondere die vom Kältemittelverdichter erzeugte Wärmeenergie, direkt zum Beheizen einer Luft, welche dem Insassenraum zuzuführen ist, verwendet werden.

Insbesondere ist der Heizkondensator in einer Luftführung angeordnet, über welche Luft in einen Fahrzeuginnenraum zuführbar ist, so dass der Heizkondensator angepasst ist, die dem Fahrzeuginnenraum zuführbare Luft zu temperieren, insbesondere zu heizen. Insbesondere zweigt die Rückführleitung stromabwärts des Kältemittelverdichters und stromaufwärts des Heizkondensators vom Hauptkreislauf ab.

Gemäß einem weiteren Ausführungsbeispiel der Erfindung ist die Ventilschaltung zusätzlich angepasst, eine Durchströmung des Hauptkreislaufs zumindest zu sperren und freizugeben, insbesondere zu sperren, teilweise freizugeben und vollständig freizugeben. Dabei fungiert die Ventilschaltung in einem Zustand, in dem es die Durchströmung durch den Hauptkreislauf teilweise freigibt, als ein Expansionsorgan, um so den Hochdruck und damit das Temperaturniveau im Heizkondensator abzusenken, wodurch die Leistungsabgabe im Heizkondensator gedrosselt werden kann.

Gemäß einem weiteren Ausführungsbeispiel der Erfindung hat die Ventilschaltung ein einziges Ventil, beispielsweise ein 3/2-Wege-Ventil, welches an der Abzweigung der Rückführleitung vom Hauptkreislauf angeordnet ist, oder die Ventilschaltung hat ein erstes Ventil, welches im Hauptkreislauf, stromabwärts der Abzweigung der Rückführleitung angeordnet ist und angepasst ist, eine Durchströmung des Hauptkreislaufs zumindest zu sperren und freizugeben (insbesondere zu sperren, teilweise freizugeben und vollständig freizugeben), und ein zweites Ventil, welches in der Rückführleitung angeordnet ist und angepasst ist, eine Durchströmung der Rückführleitung zumindest zu sperren und freizugeben (insbesondere zu sperren, teilweise freizugeben und vollständig freizugeben). Insbesondere ist das erste Ventil im Hauptkreislauf stromaufwärts des Kondensators und stromaufwärts des Heizkondensators angeordnet. Insbesondere handelt es sich bei dem einzigen Ventil oder dem ersten und/oder zweiten Ventil um ein Proportionalventil.

Ein Vorteil der Steuerung der Durchströmung des Hauptkreislaufs durch die Ventilschaltung bzw. durch das erste Ventil ist, dass im Betrieb des Kältemittelkurzschlusses, d.h. bei Durchströmung der Rückführleitung, durch teilweise Öffnung des ersten Ventils bzw. teilweise Durchströmung des Hauptkreislaufs, ein Verdichtungsenddruck nach dem Kältemittelverdichter besonders hohe Werte erreicht, dieser somit eine besonders hohe elektrische Leistung aufnimmt und diese ins Kältekreislaufsystem einspeist, während der Kondensationsdruck im Heizkondensator gerade nur so hoch wie nötig eingestellt werden kann und auf diese Weise eine möglichst hohe Enthalpiedifferenz am Heizkondensator erzielt wird. Auf diese Weise kann die Heizleistung maximiert werden.

Gemäß einem weiteren Ausführungsbeispiel der Erfindung ist der Kältekreislauf ferner versehen mit einem Chiller-Ventil, welches stromaufwärts des Chillers, und insbesondere stromabwärts des Kondensators, angeordnet ist und welches angepasst ist, eine Durchströmung zu sperren und freizugeben. Insbesondere ist das Chiller-Ventil angepasst, eine Durchströmung zu sperren, teilweise freizugeben und vollständig freizugeben. Dabei fungiert das Chiller-Ventil in einem Zustand, in dem es die Durchströmung teilweise freigibt, als ein Expansionsorgan. Beispielsweise handelt es sich bei dem Chiller-Ventil um ein Proportionalventil. Mit dem Chiller-Ventil kann der Chiller gesteuert werden.

Gemäß einem weiteren Ausführungsbeispiel der Erfindung ist der Kältekreislauf ferner versehen mit einem Verdampfer-Ventil, welches stromaufwärts des Verdampfers, und insbesondere stromabwärts des Kondensators, angeordnet ist und welches angepasst ist, eine Durchströmung zu sperren und freizugeben. Insbesondere ist das Verdampfer-Ventil angepasst, eine Durchströmung zu sperren, teilweise freizugeben und vollständig freizugeben. Dabei fungiert das Verdampfer-Ventil in einem Zustand, in dem es die Durchströmung teilweise freigibt, als ein Expansionsorgan. Beispielsweise handelt es sich bei dem Verdampfer-Ventil um ein Proportionalventil. Mit dem Verdampfer-Ventil kann der Verdampfer gesteuert werden.

Gemäß einem weiteren Ausführungsbeispiel der Erfindung ist der Kältekreislauf ferner versehen mit einem inneren Wärmetauscher bzw. inneren Wärmeüberträger, welcher die Hochdruckseite des Kältemittelverdichters wärmeübertragend und fluidisch getrennt mit der Niederdruckseite des Kältemittelverdichters verbindet. Mit diesem inneren Wärmetauscher kann die Effizienz und Leistung des Kältekreislaufs gesteuert werden.

Gemäß einem weiteren Ausführungsbeispiel der Erfindung ist eine Bypassleitung mit einem Bypassventil vorgesehen, die eine Hochdruckseite des Kältemittelverdichters mit einer Niederdruckseite des Kältemittelverdichters verbindet und die zumindest den Chiller und den Verdampfer umgeht, wobei das Bypassventil angepasst ist, eine Durchströmung zumindest zu sperren und freizugeben.

Insbesondere ist das Bypassventil angepasst, eine Durchströmung zu sperren, teilweise freizugeben und vollständig freizugeben. Dabei fungiert dieses Bypassventil in einem Zustand, in dem es die Durchströmung teilweise freigibt, als ein Expansionsorgan. Beispielsweise handelt es sich beim Bypassventil um ein Proportionalventil.

Gemäß einem weiteren Ausführungsbeispiel der Erfindung ist der Kältekreislauf ferner versehen mit einem Flüssigkeitssammler. Dieser kann beispielsweise der auf der Niederdruckseite des Kältemittelverdichters angeordnet sein. Bei dieser Anordnung sorgt der Flüssigkeitssammler dafür, dass zuverlässig gasförmige Bestandteile aus dem Kältemittel entnommen werden, so dass am Eingang des Kältemittelverdichters das Kältemittel möglichst nur noch gasförmig vorliegt. Der Flüssigkeitssammler kann ebenso auf der Hochdruckseite des Kältemittelverdichters angeordnet sein. Insgesamt hat der Flüssigkeitssammler im normalen Kältekreislaufbetrieb die Aufgaben des Pufferns von Kältemittelmasse zum Ausgleichen der umlaufenden Kältemittelmenge bei verschiedenen Betriebszuständen des Kältekreislaufes, des Trennens von Gas und Restflüssigkeit des eintretenden verdampften Kältemittels, des Sammelns der Flüssigkeit und des Entnehmens des gasförmigen Kältemittels.

Darüber hinaus stellt die vorliegende Erfindung ein Wärmemanagementsystem mit solch einem Kältekreislauf, einem Kühlkreislauf und einem Klimagerät bereit.

Ferner stellt die vorliegende Erfindung ein Kraftfahrzeug mit solch einem Kältekreislauf oder solch einem Wärmemanagementsystem bereit.

Darüber hinaus stellt die Erfindung ein Verfahren zum Steuern eines solchen Kältekreislaufs bereit, wobei der Kältekreislauf in einem Betriebszustand betrieben wird, in welchem die Ventilschaltung eine Durchströmung des Hauptkreislaufs sperrt und eine Durchströmung der Rückführleitung freigibt, so dass eine Wärmeabfuhr aus dem Kältekreislauf über den Heizkondensator und den Kondensator verhindert wird. Dieser Betriebszustand ermöglicht, wie bereits vorstehend beschrieben, ein besonders schnelles Aufstarten des Kältekreislaufs, da eine Wärmeabgabe im Wesentlichen unterbunden wird.

Darüber hinaus stellt die Erfindung ein Verfahren zum Steuern eines solchen Kältekreislaufs bereit, wobei der Kältekreislauf in einem Betriebszustand betrieben wird, in welchem die Ventilschaltung eine Durchströmung des Hauptkreislaufs freigibt und eine Durchströmung der Rückführleitung freigibt. Durch diesen Betriebszustand kann trotz schnellem Aufstarten des Kältekreislaufs bereits eine Wärmeabgabe, insbesondere über den Heizkondensator, erfolgen.

Gemäß einem weiteren Ausführungsbeispiel des Verfahrens wird eine Durchströmung des Hauptkreislaufs über die Ventilschaltung, insbesondere über einen Öffnungsgrad des ersten Ventils, in Abhängigkeit von einem Heizleistungsbedarf in einem Fahrzeuginsassenraum eingestellt.

Gemäß einem weiteren Ausführungsbeispiel des Verfahrens wird der Kältekreislauf in einem Betriebszustand betrieben, in welchem ein Druckniveau auf der Niederdruckseite des Kältemittelverdichters über eine Steuerung der Ventilschaltung, des Verdampfer-Ventils, des Chiller-Ventils und des Kältemittelverdichters so eingestellt wird, dass der Kältemittelverdichter auf seinem Dauerleistungsmaximum betrieben wird.

Nachfolgend wird ein bevorzugtes Ausführungsbeispiel der vorliegenden Erfindung unter Bezugnahme auf die beigefügten Zeichnungen beschrieben. In diesen Zeichnungen ist Folgendes dargestellt:
- Figur 1: zeigt schematisch einen Kältekreislauf gemäß einem ersten Ausführungsbeispiel der Erfindung;
- Figur 2: zeigt schematisch einen Kältekreislauf gemäß einem zweiten Ausführungsbeispiel der Erfindung;
- Figur 3: zeigt schematisch einen Kältekreislauf gemäß einem dritten Ausführungsbeispiel der Erfindung;
- Figur 4: zeigt schematisch einen Kältekreislauf gemäß einem vierten Ausführungsbeispiel der Erfindung;
- Figur 5: zeigt schematisch einen Kältekreislauf gemäß einem fünften Ausführungsbeispiel der Erfindung;
- Figur 6: zeigt schematisch einen Kältekreislauf gemäß einem sechsten Ausführungsbeispiel der Erfindung;
- Figur 7: zeigt schematisch einen Kältekreislauf gemäß einem siebten Ausführungsbeispiel der Erfindung;
- Figur 8: zeigt schematisch einen Kältekreislauf gemäß einem achten Ausführungsbeispiel der Erfindung;
- Figur 9: zeigt schematisch einen Kältekreislauf gemäß einem neunten Ausführungsbeispiel der Erfindung, und
- Figur 10: zeigt schematisch einen Kältekreislauf gemäß einem zehnten Ausführungsbeispiel der Erfindung.

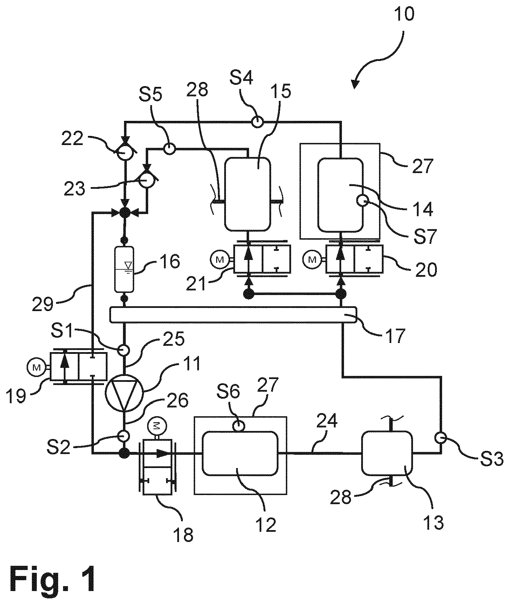

Figur 1 zeigt schematisch einen Kältekreislauf 10 gemäß einem ersten Ausführungsbeispiel der Erfindung. Der Kältekreislauf 10 weist einen Kältemittelverdichter 11, einen Heizkondensator 12, einen Kondensator 13, insbesondere ist dieser ein wassergekühlter Kondensator, einen Klima-Verdampfer bzw. Verdampfer 14, einen Chiller 15, einen Flüssigkeitssammler 16 sowie einen inneren Wärmetauscher 17 bzw. inneren Wärmeüberträger auf. Darüber hinaus ist eine Ventilschaltung aufweisend ein erstes Ventil 18 und ein zweites Ventil 19 vorgesehen, wie in Figur 1 dargestellt. Alternativ kann die Ventilschaltung auch durch ein einziges Ventil, beispielsweise einem 3/2-Wege-Ventil mit einem Eingang und zwei Ausgängen, verwirklicht werden. Des Weiteren ist im Kältekreislauf 10 ein Verdampfer-Ventil 20 sowie ein Chiller-Ventil 21 vorgesehen. Diese Ventilschaltung bzw. die Ventile 18 und 19 sowie die Ventile 20 und 21 sind angepasst, eine Durchströmung zu sperren oder freizugeben, insbesondere zu sperren, teilweise freizugeben oder vollständig freizugeben. Ferner fungieren die Ventilschaltung und die Ventile im teilgeöffneten Zustand als Expansionsorgane.

Der Verdampfer 14 und der Chiller 15 sind zueinander parallel geschaltet. Genauer ist eine Reihenschaltung aus dem Verdampfer-Ventil 20, dem Verdampfer 14 und einem Rückschlagventil 22 bzw. Einwegeventil parallel zu einer Reihenschaltung aus dem Chiller-Ventil 21, dem Chiller 15 und einem Rückschlagventil 23 bzw. Einwegeventil angeordnet. Die genannten Elemente sind in der jeweiligen Reihenschaltung insbesondere in Strömungsrichtung in der genannten Reihenfolge angeordnet.

In dem Kältekreislauf 10, insbesondere durch die Komponenten des Kältekreislaufs 10, zirkuliert ein Kältemittel, beispielsweise R134a, R1234yf, R744, R290 oder dergleichen.

Der Kältekreislauf 10 bildet einen Hauptkreislauf 24 aus, in dem der Kältemittelverdichter 11, das erste Ventil 18 (bzw. die Ventilschaltung), der Heizkondensator 12, der Kondensator 13, die Parallelschaltung aus Verdampfer 14 und Chiller 15 sowie der Flüssigkeitssammler 16 in Reihe geschaltet sind. Insbesondere sind die genannten Komponenten, in Strömungsrichtung des Kältemittels gesehen, in dieser Reihenfolge in Reihe geschaltet. Es ist aber auch eine andere Reihenfolge möglich, beispielsweise könnten der Heizkondensator 12 und der Kondensator 13 bzgl. der Reihenfolge getauscht werden.

Der Kältemittelverdichter 11 ist insbesondere ein elektrisch angetriebener Kältemittelverdichter und weist eine Eingangsseite bzw. Niederdruckseite 25 sowie eine Ausgangsseite bzw. Hochdruckseite 26 auf.

Der Heizkondensator 12 ist insbesondere ein Luft-Flüssigkeits-Wärmeüberträger, der von dem Kältemittel durchströmbar ist und in einem Klimagerät 27 angeordnet ist. Genauer ist der Heizkondensator 12 in einer Luftführung des Klimageräts 27 angeordnet, über welche einem Fahrzeuginsassenraum Luft zuführbar ist, so dass diese Luft mittels des Heizkondensators 12 temperierbar, insbesondere beheizbar, ist.

Der Verdampfer 14 ist insbesondere ein Luft-Flüssigkeits-Wärmeüberträger, der von dem Kältemittel durchströmbar ist und ebenfalls in dem Klimagerät 27 angeordnet ist. Genauer ist der Verdampfer 14 zusammen mit dem Heizkondensator 12 in der Luftführung des Klimageräts 27 angeordnet, über welche dem Fahrzeuginsassenraum Luft oder Umluft zuführbar ist, so dass diese Luft mittels des Verdampfers 14 temperierbar, insbesondere kühlbar, ist.

Der Kondensator 13 ist von dem Kältemittel des Hauptkreislaufs 24 durchströmbar und fluidisch davon getrennt und in Wärmetausch mit diesem befindlich von einem Kühlmittel eines Kühlkreislaufs 28. Der Kühlkreislauf 28 wird im Rahmen dieser Erfindung nicht näher beschrieben, es kann sich jedoch um einen Kühlkreislauf handeln, wie beispielsweise aus der DE 10 2019 107 191 A1 oder der DE 10 2019 120 229 A1 bekannt.

Der Chiller 15 ist ein Wärmeüberträger, der Wärmeenergie zwischen dem Kältemittel des Kältekreislaufs 10 und dem Kühlmittel des Kühlkreislaufs 28 überträgt. Dazu durchströmen das Kältemittel und das Kühlmittel fluidisch getrennt voneinander und in Wärmetausch miteinander befindlich den Chiller 15.

Zum Einstellen der Durchströmung des Verdampfers 14, zum Einstellen der Expansion des Kühlmittels vor dem Verdampfer 14 und somit zum Einstellen seiner Kühlleistung ist diesem das Verdampfer-Ventil 20 vorgeschaltet. Zum Einstellen der Durchströmung des Chillers 15 und zum Einstellen der Expansion des Kühlmittels vor dem Chiller 15 ist diesem das Chiller-Ventil 21 vorgeschaltet. Dabei fungieren das Verdampfer-Ventil 20 und das Chiller-Ventil 21 im teilweise geöffneten Zustand als Expansionsorgane. Es kann sich beispielsweise um selbstregelnde und elektrisch regelbare Expansionsorgane handeln.

Der Kältekreislauf 10 weist ferner den inneren Wärmetauscher 17 auf, der zwei in Wärmekontakt, aber fluidisch voneinander getrennt durchströmbare Kammern hat. Dabei ist im Hauptkreislauf 24 eine Kammer zwischen dem Kondensator 13 und der Parallelschaltung aus Verdampfer 14 und Chiller 15 und die andere Kammer zwischen dem Flüssigkeitssammler 16 und dem Kältemittelverdichter 11 angeordnet. Die Kammern werden vorzugsweise in entgegengesetzter Richtung durchströmt und bilden somit einen Gegenstromwärmetauscher aus. Den inneren Wärmetauscher 17 durchströmt somit in einer Kammer das vom Flüssigkeitssammler 16 kommende gasförmige, auf Niederdruckniveau befindliche Kältemittel und in der anderen Kammer das vom Kondensator 13 kommende auf Hochdruck befindliche, flüssige Kältemittel. Durch den inneren Wärmetauscher 17 wird dem flüssigen Kältemittel Wärmeenergie entzogen, was dazu führt, dass das Kältemittel weiter abgekühlt wird. Dem überwiegend gasförmigen Kältemittel wird diese Energie zugeführt, was dazu führt, dass ein noch höherer Anteil verdampft und gasförmig vorliegt. Dies dient zur Leistungs- und Effizienzsteigerung des Kältekreislaufs 10. Für die Funktion des Kältekreislaufs 10 ist der innere Wärmetauscher 17 jedoch nicht zwingend erforderlich.

Zur Steuerung des Kältekreislaufs 10 sind mehrere Sensoren S1 bis S7 vorgesehen, wobei es sich bei den Sensoren S1 bis S5 um jeweils einen Sensor oder eine Kombination von Sensoren zur Messung einer Kältemitteltemperatur und eines Kältemitteldrucks handelt. Bei den Sensoren S6 und S7 handelt es sich um Temperatursensoren. Der Sensor S1 ist an einer Eingangsseite und der Sensor S2 an einer Ausgangsseite des Kältemittelverdichters 11 vorgesehen. Der Sensor S3 ist stromabwärts des Kondensators 13 angeordnet, insbesondere zwischen dem Kondensator 13 und der Parallelschaltung aus Verdampfer 14 und Chiller 15, genauer zwischen dem Kondensator 13 und dem inneren Wärmetauscher 17. Die Positionierung des Sensors S3 nach dem Kondensator 13 ist deshalb vorteilhaft, da hier die Unterkühlung nach der Kondensation ermittelt werden kann, welche in der Steuerung und Regelung sinnvoll weiterverarbeitet werden kann. Der Sensor S3 kann aber auch an irgendeiner anderen Stelle zwischen dem ersten Ventil 18 und der Parallelschaltung aus Verdampfer 14 und Chiller 15 (insbesondere stromaufwärts des Verdampfer-Ventil 20 und des Chiller-Ventils 21) angeordnet sein, da in diesem Strang überall der gleiche Kältemitteldruck herrscht. Bei einer solchen alternativen Anordnung verzichtet man dann allerdings auf die Information der Unterkühlung nach Kondensator 13. Der Sensor S4 ist an einer Ausgangsseite des Verdampfers 14, insbesondere stromaufwärts des Rückschlagventils 22, vorgesehen. Der Sensor S5 ist an einer Ausgangsseite des Chiller 15, insbesondere stromaufwärts des Rückschlagventils 23, vorgesehen. Der Sensor S6 ist am Heizkondensator 12 angeordnet, um dessen Temperatur zu erfassen und der Sensor S7 ist am Verdampfer 14 angeordnet, um dessen Temperatur zu erfassen.

Erfindungsgemäß ist eine Rückführleitung 29 vorgesehen, die auf der Hochdruckseite 26 des Kältemittelverdichters 11, insbesondere zwischen dem Verdichter 11 und dem ersten Ventil 18, vom Hauptkreislauf 24 abzweigt und auf der Niederdruckseite 25, insbesondere zwischen der Parallelschaltung des Verdampfer 14 und des Chiller 15 und dem Flüssigkeitssammler 16 wieder in den Hauptkreislauf 24 mündet. Für den Fall, dass die Ventilschaltung aus einem einzigen Ventil gebildet wird, dann wäre dieses Ventil an der Abzweigung der Rückführleitung 29 vom Hauptkreislauf 24 vorzusehen.

In einem Betriebszustand, in dem das erste Ventil 18 eine Durchströmung sperrt und das zweite Ventil 19 eine Durchströmung freigibt, wird über die Rückführleitung 29 ein Kurzschluss-Kreislauf ausgebildet, der nur den Kältemittelverdichter 11, die Rückführleitung 29 inklusive des zweiten Ventils 19, den Flüssigkeitssammler 16 und den inneren Wärmetauscher 17 aufweist. In diesem Betriebszustand wird Kältemittel nur in diesem Kurzschluss-Kreislauf und durch die Sperrung des ersten Ventils 18 nicht im Hauptkreislauf 24 zirkuliert.

Über diesen Kurzschluss-Kreislauf wird Kältemittel in Form von Heißgas von der Hochdruckseite 26 entnommen, vom zweiten Ventil 19 auf ein Niederdruckniveau expandiert und der Niederdruckseite 25 zugeführt. Durch diese Kältemittelheißgaseinspritzung auf der Niederdruckseite des Kältemittelverdichters 11, kann insbesondere in einer Anlaufphase ein sehr schnelles Aufstarten des Kältekreislaufs 10 erreicht werden, weil dem Kältemittel über den Kältemittelverdichter Wärmeenergie zugeführt wird, diese dann zurück zum Eingang des Kältemittelverdichters 11 zurück zirkuliert und erneut mit Wärmeenergie beaufschlagt wird, ohne dass dem Kältemittel diese Wärmeenergie wieder wesentlich entzogen wird.

Der Kältekreislauf 10 kann ferner in einem Betriebszustand betrieben werden, in dem das erste Ventil 18 teilweise oder vollständig geöffnet ist und das zweite Ventil 19 eine Durchströmung sperrt, so dass der Hauptkreislauf 24 in Betrieb ist (Kältemittel zirkuliert) und der Kurzschluss-Kreislauf nicht in Betrieb ist (Kältemittel nicht zirkuliert). Dieser Betriebszustand ist beispielsweise dann geeignet, wenn die Kältekreisleistungsanforderung (beispielsweise zum Beheizen des Fahrzeuginsassenraums) nicht so hoch ist, so dass die vorstehend beschriebene zusätzlich Wärmeenergie vom Kurzschluss-Kreislauf nicht benötigt wird.

Darüber hinaus kann der Kältekreislauf 10 in einem Betriebszustand betrieben werden, in dem das erste Ventil 18 teilweise oder vollständig geöffnet ist und das zweite Ventil 19 ebenfalls teilweise oder vollständig geöffnet ist, so dass sowohl der Kurzschluss-Kreislauf als auch der Hauptkreislauf 24 in Betrieb ist. Dieser Betriebszustand ist beispielsweise nach einer Anlaufphase geeignet, wobei im Dauerbetrieb nach wie vor eine hohe Kältekreisleistung (beispielsweise zum Beheizen des Fahrzeuginsassenraums) erforderlich ist.

Wenn der Kurzschluss-Kreislauf, wie vorstehend beschrieben, in Betrieb ist, wird dem Kältekreislauf 10 durch den Antrieb des Kältemittelverdichters 11 Wärmeenergie zugeführt. Diese Wärmeenergie kann dann anschließend, falls zunächst nur der Kurzschluss-Kreislauf betrieben wird, oder parallel, falls gleichzeitig der Kurzschluss-Kreislauf und der Hauptkreislauf 24 betrieben wird, am Heizkondensator 12 an das Klimagerät 27 abgegeben werden, so dass schneller eine höhere Heizleistung bereitgestellt werden kann.

Anders ausgedrückt, wird beim Aufstarten des Kältekreislaufes 11 durch Sperrung einer Durchströmung des ersten Ventils 18, eine Wärmeabgabe am Heizkondensator 12 und/oder am Kondensator 13 vermieden, wodurch der Kältekreislauf 10 schneller hochgefahren werden kann.

In einem Heizbetrieb, bei dem sowohl der Hauptkreislauf 24 als auch der Kurzschluss-Kreislauf in Betrieb ist, kann über das erste Ventil 18 am Heizkondensator 12 ein optimaler Zwischendruck eingestellt werden, so dass eine Kältemittelkondensationstemperatur zur bedarfsgerechten Wärmeabgabe vom Heizkondensator 12 an das Klimagerät 27, genauer an die zu beheizende Luft, und eine bedarfsgerechte Wärmeabgabe am Kondensator 13 einstellbar ist.

Über die Steuerung des ersten und zweiten Ventils 18, 19, des Verdampfer-Ventils 20 und des Chiller-Ventils 21 sowie einer Steuerung des Kältemittelverdichters 11, kann in einem Wärmepumpenbetrieb ein Niederdruckniveau so eingestellt werden, dass zusätzlich zur Wärmeaufnahme am Chiller 15 eine Heizleistung durch Zumischen von Heißgas auf die Niederdruckseite 25 gesteigert werden kann.

Ferner kann beim Betrieb des Kurzschluss-Kreislaufs das Niederdruckniveau über Steuerung des ersten Ventils 18, des zweiten Ventils 19, des Chiller-Ventils 21 und eine Ansteuerung des Kältemittelverdichters 11 so eingestellt werden, dass eine resultierende Kältemittelsättigungstemperatur bzw. Kältemitteldichte maximal hoch liegt, damit der Kältemittelverdichter 11 maximal belastet wird. Damit liegt die resultierende Kältemittelsättigungstemperatur in der Regel über der Luft- bzw. Kühlmitteltemperatur am Verdampfer 14 bzw. Chiller 15.

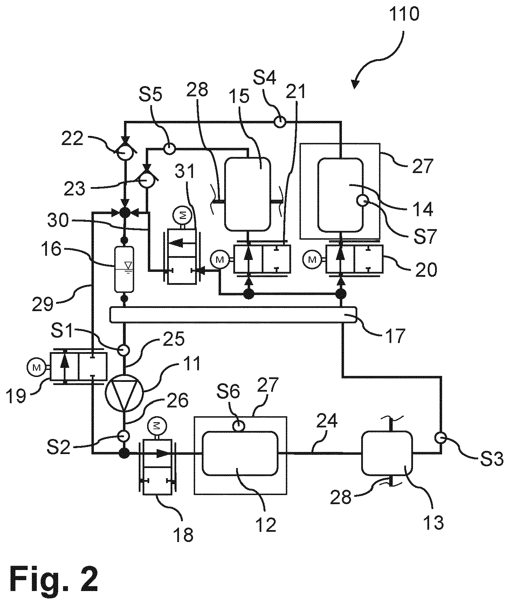

Figur 2 zeigt schematisch einen Kältekreislauf 110 gemäß einem zweiten Ausführungsbeispiel der Erfindung. Der Kältekreislauf 110 unterscheidet sich vom Kältekreislauf 10 nur dadurch, dass zur Parallelschaltung des Verdampfers 14 und des Chillers 15 eine Bypassleitung 30 vorgesehen ist, welche sich parallel zur Reihenschaltung aus dem Verdampfer-Ventil 20, dem Verdampfer 14 und dem Rückschlagventil 22 sowie parallel zur Reihenschaltung aus dem Chiller-Ventil 21, dem Chiller 15 und dem Rückschlagventil 23 erstreckt. In der Bypassleitung 30 ist ein Bypassventil 31 angeordnet, welches angepasst ist, eine Durchströmung zu sperren oder freizugeben, insbesondere zu sperren teilweise freizugeben oder vollständig freizugeben.

Das Bypassventil 31 wird insbesondere so angesteuert, dass es eine Durchströmung ganz oder teilweise freigibt, während der Kurzschluss-Kreislauf und der Hauptkreislauf 24 in Betrieb sind. Eine Durchströmung des Chillers 15 und des Verdampfers 14 wird unterbunden, indem diese auf der Hochdruckseite über das Verdampfer-Ventil 20 und das Chiller-Ventil 21 und auf der Niederdruckseite über die Rückschlagventile 22 und 23 abgesperrt sind. Somit wird vermieden, dass beim Betrieb des Kurzschluss-Kreislaufs über die Rückschlagventile 22 und 23 an den Ausgängen des Chillers 15 und des Verdampfers 14 ein niedrigerer Druck anliegt als an deren Eingängen, so dass Kältemittel in den Chiller 15 und den Verdampfer 14 gezogen werden könnte.

Somit kann im ersten und zweiten Ausführungsbeispiel ein Betriebszustand vorgesehen sein, in dem eine Kühlmitteldurchströmung durch den Chiller 15 durch Schließen des Verdampfer-Ventils 20 und des Chiller-Ventils 21 am Verdampfer 14 gesperrt wird, so dass eine Wärmeabfuhr am Chiller 15 und Verdampfer 14 zeitweise verhindert wird.

Das Bypassventil 31 kann ebenfalls so angesteuert werden, dass dieses teilweise oder ganz geöffnet wird, während der Hauptkreislauf 24 in Betrieb ist. Gleichzeitig sind das Verdampfer-Ventil 20 und das Chiller-Ventil 21 geschlossen. Somit wird eine Wärmeabfuhr sowohl am Verdampfer 14 als auch am Chiller 15 verhindert.

Abgesehen von dem Bypassventil 31 und der Bypassleitung 30 entspricht der Kältekreislauf 110 dem Kältekreislauf 10 gemäß dem ersten Ausführungsbeispiel, weshalb auf dessen Beschreibung verwiesen wird.

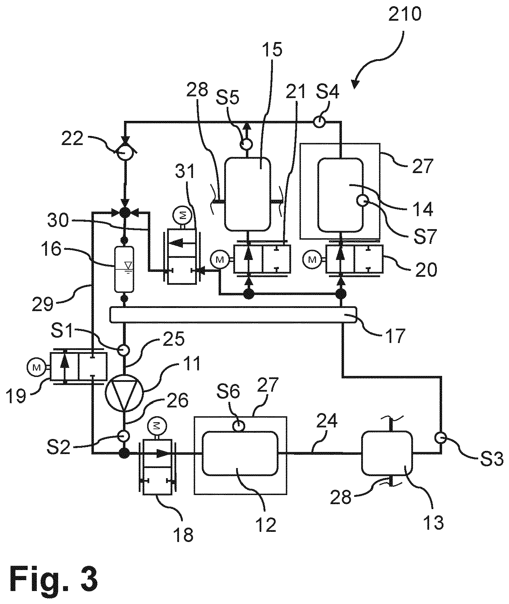

Figur 3 zeigt schematisch einen Kältekreislauf 210 gemäß einem dritten Ausführungsbeispiel der Erfindung. Der Kältekreislauf 210 unterscheidet sich vom Kältekreislauf 110 nur dadurch, dass das Rückschlagventil 23 entfällt. Das heißt, eine Reihenschaltung aus dem Verdampfer-Ventil 20 und dem Verdampfer 14 ist parallel zu einer Reihenschaltung aus dem Chiller-Ventil 21 und dem Chiller 15. Das Rückschlagventil 22 ist stromab dieser parallelen Reihenschaltungen angeordnet. Parallel zur Verschaltung aus Verdampfer-Ventil 20, Verdampfer 14, Chiller-Ventil 21, Chiller 15 und Rückschlagventil 22 ist wiederum die Bypassleitung 30 angeordnet. Dies hat den Vorteil, dass man ein Rückschlagventil einsparen kann.

Abgesehen von diesem gemeinsamen Rückschlagventil 22 entspricht der Kältekreislauf 210 dem Kältekreislauf 110 gemäß dem zweiten Ausführungsbeispiel, weshalb auf dessen Beschreibung verwiesen wird.

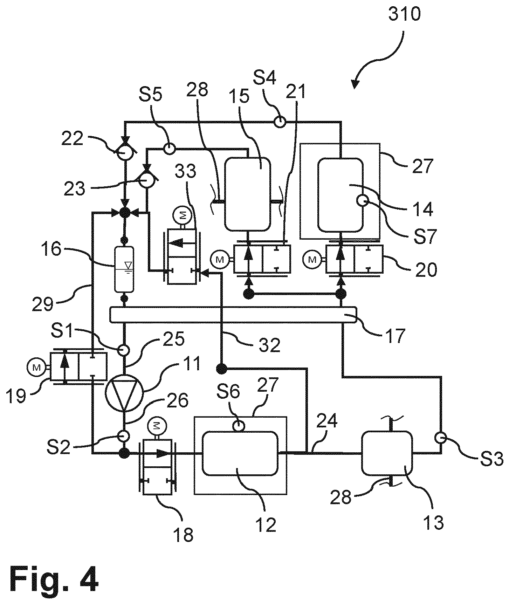

Figur 4 zeigt schematisch einen Kältekreislauf 310 gemäß einem vierten Ausführungsbeispiel der Erfindung. Der Kältekreislauf 310 unterscheidet sich vom Kältekreislauf 10 nur dadurch, dass parallel zur Reihenschaltung aus Kondensator 13 und der Parallelschaltung umfassend den Verdampfer 14 und den Chiller 15 eine Bypassleitung 32 vorgesehen ist, welche zwischen dem Heizkondensator 12 und dem Kondensator 13 von dem Hauptkreislauf 24 abzweigt und zwischen den Rückschlagventilen 22, 23 und dem Flüssigkeitssammler 16 wieder zurück in den Hauptkreislauf 24 mündet. In der Bypassleitung 32 ist ein Bypassventil 33 angeordnet, welches angepasst ist, eine Durchströmung zu sperren oder freizugeben, insbesondere zu sperren teilweise freizugeben oder vollständig freizugeben.

In einem Betriebszustand, in dem die Bypassleitung 32 durch Ansteuerung des Bypassventils 33 freigegeben ist sowie gleichzeitig das Verdampfer-Ventil 20 und das Chiller-Ventil 21 geschlossen sind, strömt der Kältemittelstrom nicht durch den Kondensator 13, den Verdampfer 14 und den Chiller 15, so dass eine Wärmeabfuhr aus dem Kältekreislauf 310 über diese Komponente verhindert wird. Dies führt trotz Wärmeabgabe am Heizkondensator 12 zu einem schnelleren Aufstartverhalten des Kältekreislaufs 310. So kann parallel zum Betreiben des Kurzschluss-Kreislaufs bereits eine Beheizung des Fahrzeuginsassenraums über den Heizkondensator 12 erfolgen.

Wahlweise kann das Verdampfer-Ventil 20 und/oder das Chiller-Ventil 21 teilweise oder ganz geöffnet werden, was zur Folge hat, dass die Wärmeabgabe an den durchströmten Komponenten nicht vollständig, sondern nur teilweise unterbunden wird.

Abgesehen von der Bypassleitung 32 und dem sechsten Ventil 33 entspricht der Kältekreislauf 310 dem Kältekreislauf 10 gemäß dem ersten Ausführungsbeispiel, weshalb auf dessen Beschreibung verwiesen wird.

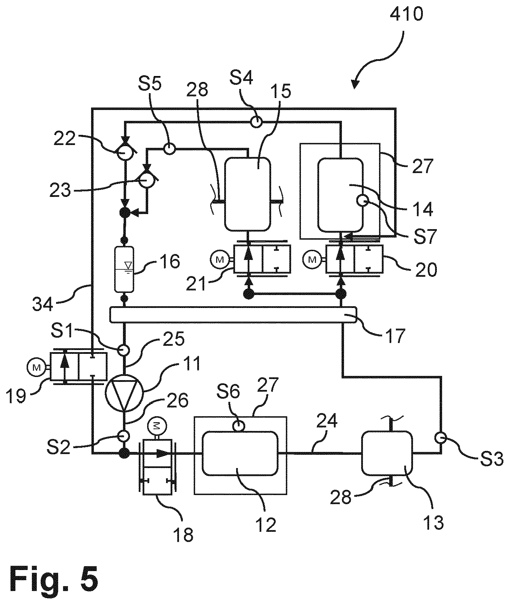

Figur 5 zeigt schematisch einen Kältekreislauf 410 gemäß einem fünften Ausführungsbeispiel der Erfindung. Der Kältekreislauf 410 unterscheidet sich vom Kältekreislauf 10 nur dadurch, dass die Rückführleitung 34 verglichen mit der Rückführleitung 29 an einer anderen Stelle in den Hauptkreislauf 24 einmündet. So mündet die Rückführleitung 34 stromaufwärts des Verdampfers 14, genauer zwischen dem Verdampfer-Ventil 20 und dem Verdampfer 14 zurück in den Hauptkreislauf 24. Abgesehen von dieser geänderten Einmündung trifft für die Rückführleitung 34 die Beschreibung der Rückführleitung 29 zu.

Abgesehen von der Einmündung der Rückführleitung 34 entspricht der Kältekreislauf 410 dem Kältekreislauf 10 gemäß dem ersten Ausführungsbeispiel, weshalb auf dessen Beschreibung verwiesen wird.

Dieses Ausführungsbeispiel hat den Vorteil, dass dadurch ein Bypassventil wie im zweiten, dritten und vierten Ausführungsbeispiel überflüssig wird.

Ferner kann in diesem Ausführungsbeispiel ein Betriebszustand vorgesehen sein, in dem eine klimageräteseitige Luftströmung am Verdampfer 14 gesperrt wird, so dass eine Wärmeabfuhr am Verdampfer 14 zeitweise verhindert wird.

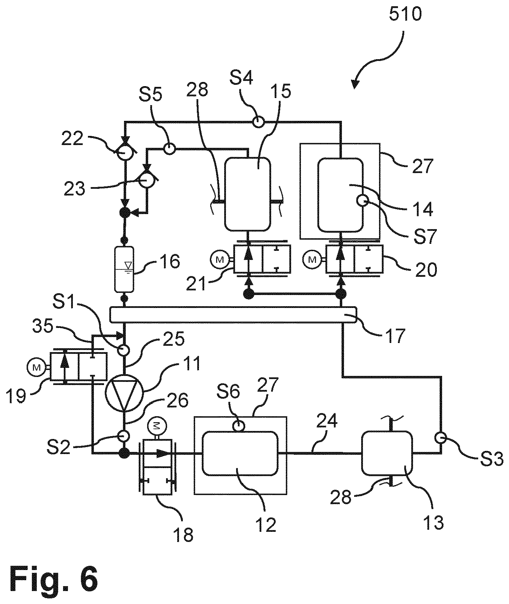

Figur 6 zeigt schematisch einen Kältekreislauf 510 gemäß einem sechsten Ausführungsbeispiel der Erfindung. Der Kältekreislauf 510 unterscheidet sich vom Kältekreislauf 10 nur dadurch, dass die Rückführleitung 35 verglichen mit der Rückführleitung 29 an einer anderen Stelle in den Hauptkreislauf 24 einmündet. So mündet die Rückführleitung 35 an der Eingangsseite des Kältemittelverdichters 11, genauer zwischen dem inneren Wärmetauscher 17 und dem Kältemittelverdichter 11, zurück in den Hauptkreislauf 24. Abgesehen von dieser geänderten Einmündung trifft für die Rückführleitung 35 die Beschreibung der Rückführleitung 29 zu.

Abgesehen von der Einmündung der Rückführleitung 35 entspricht der Kältekreislauf 510 dem Kältekreislauf 10 gemäß dem ersten Ausführungsbeispiel, weshalb auf dessen Beschreibung verwiesen wird.

Dieses Ausführungsbeispiel hat den Vorteil, dass durch die veränderte Einmündung im Kurzschluss-Kreislauf der innere Wärmetauscher 17 umgangen wird, wodurch ein Wärmeabfluss über den inneren Wärmetauscher 17 vermieden wird.

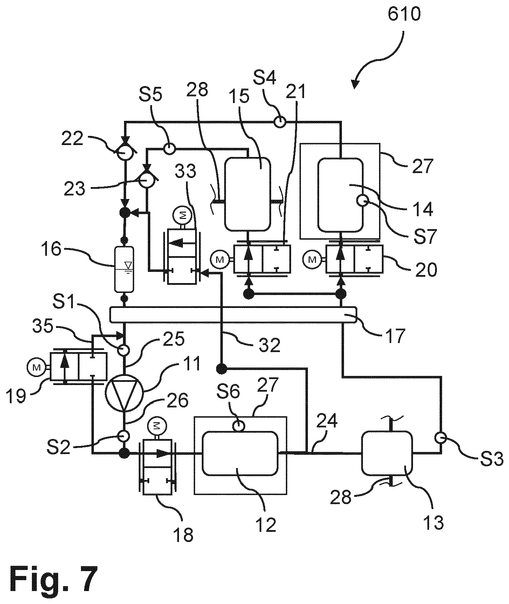

Figur 7 zeigt schematisch einen Kältekreislauf 610 gemäß einem siebten Ausführungsbeispiel der Erfindung. Der Kältekreislauf 610 unterscheidet sich vom Kältekreislauf 310 nur dadurch, dass die Rückführleitung 35 verglichen mit der Rückführleitung 29 an einer anderen Stelle in den Hauptkreislauf 24 einmündet. So mündet die Rückführleitung 35 an der Eingangsseite des Kältemittelverdichters 11, genauer zwischen dem inneren Wärmetauscher 17 und dem Kältemittelverdichter 11, zurück in den Hauptkreislauf 24. Abgesehen von dieser geänderten Einmündung trifft für die Rückführleitung 35 die Beschreibung der Rückführleitung 29 zu.

Abgesehen von der Einmündung der Rückführleitung 35 entspricht der Kältekreislauf 610 dem Kältekreislauf 310 gemäß dem vierten Ausführungsbeispiel, weshalb auf dessen Beschreibung verwiesen wird.

Dieses Ausführungsbeispiel hat ebenfalls den Vorteil, dass durch die veränderte Einmündung im Kurzschluss-Kreislauf der innere Wärmetauscher 17 umgangen wird, wodurch ein Wärmeabfluss über den inneren Wärmetauscher 17 vermieden wird.

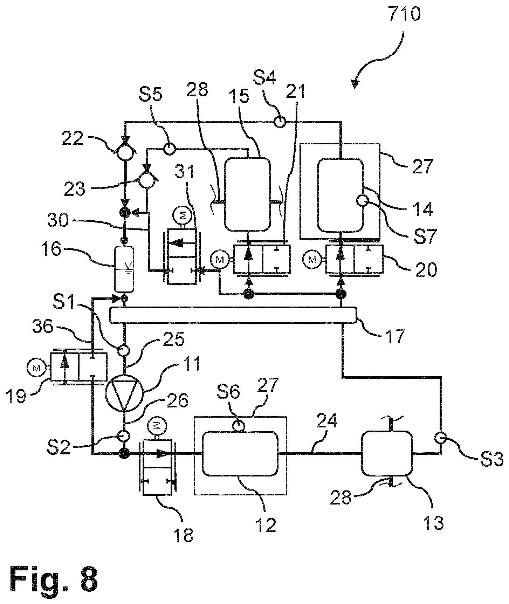

Figur 8 zeigt schematisch einen Kältekreislauf 710 gemäß einem achten Ausführungsbeispiel der Erfindung. Der Kältekreislauf 710 unterscheidet sich vom Kältekreislauf 110 nur dadurch, dass die Rückführleitung 36 verglichen mit der Rückführleitung 29 an einer anderen Stelle in den Hauptkreislauf 24 einmündet. So mündet die Rückführleitung 36 zwischen dem Flüssigkeitssammler 16 und dem inneren Wärmetauscher 17 stromaufwärts des Kältemittelverdichters 11 zurück in den Hauptkreislauf 24. Abgesehen von dieser geänderten Einmündung trifft für die Rückführleitung 36 die Beschreibung der Rückführleitung 29 zu.

Abgesehen von der Einmündung der Rückführleitung 36 entspricht der Kältekreislauf 710 dem Kältekreislauf 110 gemäß dem zweiten Ausführungsbeispiel, weshalb auf dessen Beschreibung verwiesen wird.

Dieses Ausführungsbeispiel hat den Vorteil, dass im Kurzschluss-Kreislauf ein Wärmetausch über den inneren Wärmetauscher 17 möglich ist. Der Kältemittelverdichter wird durch den inneren Wärmetauscher vor flüssigem Kältemittel geschützt.

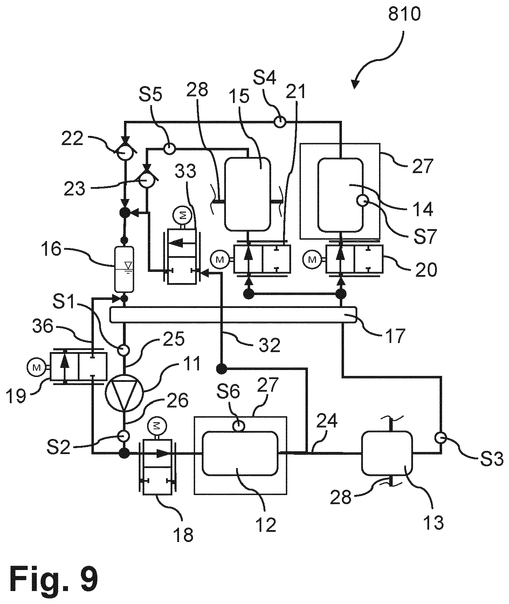

Figur 9 zeigt schematisch einen Kältekreislauf 810 gemäß einem neunten Ausführungsbeispiel der Erfindung. Der Kältekreislauf 810 unterscheidet sich vom Kältekreislauf 310 nur dadurch, dass die Rückführleitung 36 verglichen mit der Rückführleitung 29 an einer anderen Stelle in den Hauptkreislauf 24 einmündet. So mündet die Rückführleitung 36 zwischen dem Flüssigkeitssammler 16 und dem inneren Wärmetauscher 17 stromaufwärts des Kältemittelverdichters 11 zurück in den Hauptkreislauf 24. Abgesehen von dieser geänderten Einmündung trifft für die Rückführleitung 36 die Beschreibung der Rückführleitung 29 zu.

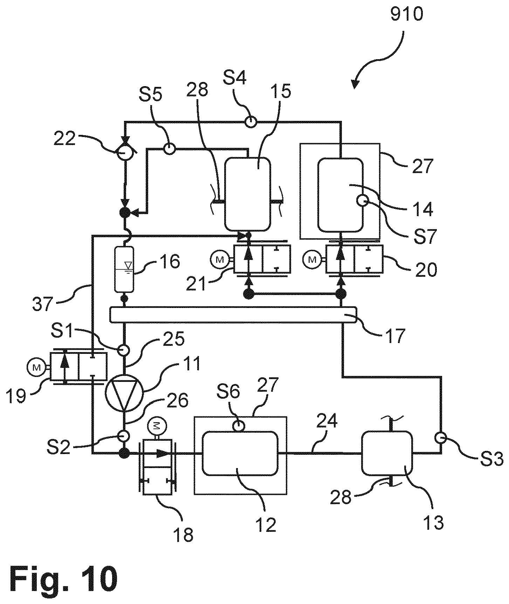

Abgesehen von der Einmündung der Rückführleitung 36 entspricht der Kältekreislauf 810 dem Kältekreislauf 310 gemäß dem vierten Ausführungsbeispiel, weshalb auf dessen Beschreibung verwiesen wird. Dieses Ausführungsbeispiel hat ebenfalls den Vorteil, dass im Kurzschluss-Kreislauf ein Wärmetausch über den inneren Wärmetauscher 17 möglich ist. Figur 10 zeigt schematisch einen Kältekreislauf 910 gemäß einem zehnten Ausführungsbeispiel der Erfindung. Der Kältekreislauf 910 unterscheidet sich vom Kältekreislauf 10 nur dadurch, dass die Rückführleitung 37 verglichen mit der Rückführleitung 29 an einer anderen Stelle in den Hauptkreislauf 24 einmündet. So mündet die Rückführleitung 37 stromaufwärts des Chillers 15, genauer zwischen dem Chiller-Ventil 21 und dem Chiller 15 zurück in den Hauptkreislauf 24. Abgesehen von der geänderten Einmündung trifft für die Rückführleitung 37 die Beschreibung der Rückführleitung 29 zu. Darüber entfällt gegenüber dem Kältekreislauf 10 stromabwärts des Chillers 15 das Rückschlagventil 23.

Abgesehen von diesen beiden Unterschieden entspricht der Kältekreislauf 910 dem Kältekreislauf 10 gemäß dem ersten Ausführungsbeispiel, weshalb auf dessen Beschreibung verwiesen wird.

Der Chiller 15 dient in diesem Fall durch seine Umlenkungen als Mischkammer von flüssigen (vom Hauptkreislauf 24 kommend) mit gasförmigen Kältemittelanteilen (von der Rückführleitung 37 kommend). Während die Erfindung detailliert in den Zeichnungen und der vorangehenden Beschreibung veranschaulicht und beschrieben wurde, ist diese Veranschaulichung und Beschreibung als beispielhaft und nicht als beschränkend zu verstehen und es ist nicht beabsichtigt die Erfindung auf die offenbarten Ausführungsbeispiele zu beschränken.

## Patentansprüche

1. Kältekreislauf (10; 110; 210; 310; 410; 510; 610; 710; 810; 910), insbesondere für ein Kraftfahrzeug, mit
einem Kältemittelverdichter (11),
einem Kondensator (13) zur Wärmeübertragung mit einem Kühlkreislauf (28);
einem Chiller (15) zur Wärmeübertragung mit dem Kühlkreislauf (28);
einem Verdampfer (14) zum Temperieren von Luft in einem Klimagerät (27), wobei der Verdampfer (14) parallel zu dem Chiller (15) angeordnet ist, wobei in einem Hauptkreislauf (24) der Kältemittelverdichter (11), der Kondensator (13) und die Parallelschaltung aus Chiller (15) und Verdampfer (14) in Reihe geschaltet sind;
einer Rückführleitung (29; 34; 35; 36; 37), die auf einer Hochdruckseite des Kältemittelverdichters (11) vom Hauptkreislauf (24) abzweigt und auf einer Niederdruckseite des Kältemittelverdichters (11) in den Hauptkreislauf (24) mündet,
einer Ventilschaltung, welche angepasst ist, eine Durchströmung der Rückführleitung (29; 34; 35; 36; 37) zumindest zu sperren und freizugeben, und **gekennzeichnet durch**
einen Heizkondensator (12) zum Temperieren von Luft in dem Klimagerät (27), wobei in dem Hauptkreislauf (24) der Kältemittelverdichter (11), der Heizkondensator (12), der Kondensator (13) und die Parallelschaltung aus Chiller (15) und Verdampfer (14) in Reihe geschaltet sind.

2. Kältekreislauf (10; 110; 210; 310; 410; 510; 610; 710; 810; 910) gemäß Anspruch 1, wobei die Ventilschaltung angepasst ist, eine Durchströmung des Hauptkreislaufs (24) zumindest zu sperren und freizugeben.

3. Kältekreislauf (10; 110; 210; 310; 410; 510; 610; 710; 810; 910) gemäß einem der vorhergehenden Ansprüche, wobei
die Ventilschaltung ein Ventil aufweist, welches an der Abzweigung der Rückführleitung (29; 34; 35; 36; 37) vom Hauptkreislauf (24) angeordnet ist, oder
die Ventilschaltung ein erstes Ventil (18) aufweist, welches im Hauptkreislauf (24), stromabwärts der Abzweigung der Rückführleitung (29; 34; 35; 36; 37) angeordnet ist und angepasst ist, eine Durchströmung des Hauptkreislaufs (24) zumindest zu sperren und freizugeben, und ein zweites Ventil (19) aufweist, welches in der Rückführleitung (29; 34; 35; 36; 37) angeordnet ist und angepasst ist, eine Durchströmung der Rückführleitung (29; 34; 35; 36; 37) zumindest zu sperren und freizugeben.

4. Kältekreislauf (10; 110; 210; 310; 410; 510; 610; 710; 810; 910) gemäß einem der vorhergehenden Ansprüche, mit einem Chiller-Ventil (21), welches stromaufwärts des Chillers (15) angeordnet ist und welches angepasst ist, eine Durchströmung zu sperren und freizugeben.

5. Kältekreislauf (10; 110; 210; 310; 410; 510; 610; 710; 810; 910) gemäß einem der vorhergehenden Ansprüche, mit einem Verdampfer-Ventil (20), welches stromaufwärts des Verdampfers (14) angeordnet ist und welches angepasst ist, eine Durchströmung zu sperren und freizugeben.

6. Kältekreislauf (10; 110; 210; 310; 410; 510; 610; 710; 810; 910) gemäß einem der vorhergehenden Ansprüche, mit einem inneren Wärmetauscher (17), welcher die Hochdruckseite des Kältemittelverdichters (11) wärmeübertragend und fluidisch getrennt mit der Niederdruckseite des Kältemittelverdichters (11) verbindet.

7. Kältekreislauf (110; 210; 310; 610; 810) gemäß einem der vorhergehenden Ansprüche, wobei eine Bypassleitung (30; 32) mit einem Bypassventil (31; 33) vorgesehen ist, die eine Hochdruckseite des Kältemittelverdichters (11) mit einer Niederdruckseite des Kältemittelverdichters (11) verbindet und die zumindest den Chiller (15) und den Verdampfer (14) umgeht, wobei das Bypassventil (31; 33) angepasst ist, eine Durchströmung zumindest zu sperren und freizugeben.

8. Wärmemanagementsystem mit einem Kältekreislauf (10; 110; 210; 310; 410; 510; 610; 710; 810; 910) gemäß einem der Ansprüche 1 bis 7, einem Kühlkreislauf (28) und einem Klimagerät (27).

9. Kraftfahrzeug mit einem Kältekreislauf (10; 110; 210; 310; 410; 510; 610; 710; 810; 910) gemäß einem der Ansprüche 1 bis 7 oder einem Wärmemanagementsystem gemäß Anspruch 8.

10. Verfahren zum Steuern eines Kältekreislaufs (10; 110; 210; 310; 410; 510; 610; 710; 810; 910) gemäß einem der Ansprüche 1 bis 7, wobei der Kältekreislauf in einem Betriebszustand betrieben wird, in welchem die Ventilschaltung eine Durchströmung des Hauptkreislaufs (24) sperrt und eine Durchströmung der Rückführleitung (29; 34; 35; 36; 37) freigibt, so dass eine Wärmeabfuhr aus dem Kältekreislauf über Heizkondensator (12) und den Kondensator (13) verhindert wird.

11. Verfahren zum Steuern eines Kältekreislaufs (10; 110; 210; 310; 410; 510; 610; 710; 810; 910) gemäß einem der Ansprüche 1 bis 7, wobei der Kältekreislauf in einem Betriebszustand betrieben wird, in welchem die Ventilschaltung eine Durchströmung des Hauptkreislaufs (24) freigibt und eine Durchströmung der Rückführleitung (29; 34; 35; 36; 37) freigibt.

12. Verfahren gemäß Anspruch 11, wobei eine Durchströmung des Hauptkreislaufs (24) über die Ventilschaltung in Abhängigkeit von einem Heizleistungsbedarf in einem Fahrzeuginsassenraum eingestellt wird.

13. Verfahren gemäß Anspruch 11 oder 12, wobei der Kältekreislauf ein stromaufwärts des Chillers (15) angeordnetes Chiller-Ventil (21) und ein stromaufwärts des Verdampfers (14) angeordnetes Verdampfer-Ventil (20) aufweist, welche angepasst sind, eine Durchströmung zu sperren und freizugeben, wobei der Kältekreislauf (10; 110; 210; 310; 410; 510; 610; 710; 810; 910) in einem Betriebszustand betrieben wird, in welchem ein Druckniveau auf der Niederdruckseite (25) des Kältemittelverdichters (11) über eine Steuerung der Ventilschaltung, des Verdampfer-Ventils (20), des Chiller-Ventils (21) und des Kältemittelverdichters (11) so eingestellt wird, dass der Kältemittelverdichter (11) auf seinem Dauerleistungsmaximum betrieben wird.

## Claims

1. Refrigeration circuit (10; 110; 210; 310; 410; 510; 610; 710; 810; 910), in particular for a motor vehicle, comprising
a refrigerant compressor (11),
a condenser (13) for heat transfer with a cooling circuit (28);
a chiller (15) for heat transfer with the cooling circuit (28);
an evaporator (14) for tempering air in an air conditioning unit (27), wherein the evaporator (14) is arranged in parallel to the chiller (15), wherein, in a main circuit (24), the refrigerant compressor (11), the condenser (13) and the parallel connection of chiller (15) and evaporator (14) are connected in series;
a return line (29; 34; 35; 36; 37), which branches off from the main circuit (24) on a high-pressure side of the refrigerant compressor (11) and opens into the main circuit (24) on a low-pressure side of the refrigerant compressor (11),
a valve circuit, which is adapted to at least block and release a flow through the return line (29; 34; 35; 36; 37), and **characterized by**
a heating condenser (12) for tempering air in the air conditioning unit (27), wherein, in the main circuit (24), the refrigerant compressor (11), the heating condenser (12), the condenser (13) and the parallel connection of chiller (15) and evaporator (14) are connected in series.

2. Refrigeration circuit (10; 110; 210; 310; 410; 510; 610; 710; 810; 910) according to claim 1, wherein the valve circuit is adapted to at least block and release a flow through the main circuit (24).

3. Refrigeration circuit (10; 110; 210; 310; 410; 510; 610; 710; 810; 910) according to one of the preceding claims, wherein
the valve circuit comprises a valve, which is arranged at the branch-off of the return line (29; 34; 35; 36; 37) from the main circuit (24), or
the valve circuit comprises a first valve (18), which is arranged in the main circuit (24), downstream of the branch-off of the return line (29; 34; 35; 36; 37), and is adapted to at least block and release a flow through the main circuit (24), and comprises a second valve (19), which is arranged in the return line (29; 34; 35; 36; 37) and is adapted to at least block and release a flow through the return line (29; 34; 35; 36; 37).

4. Refrigeration circuit (10; 110; 210; 310; 410; 510; 610; 710; 810; 910) according to one of the preceding claims, comprising a chiller valve (21), which is arranged upstream of the chiller (15) and which is adapted to block and release a flow through.

5. Refrigeration circuit (10; 110; 210; 310; 410; 510; 610; 710; 810; 910) according to one of the preceding claims, comprising an evaporator valve (20), which is arranged upstream of the evaporator (14) and which is adapted to block and release a flow through.

6. Refrigeration circuit (10; 110; 210; 310; 410; 510; 610; 710; 810; 910) according to one of the preceding claims, comprising an internal heat exchanger (17), which connects the high-pressure side of the refrigerant compressor (11) in a heat-transferring manner and in a fluidically separated manner to the low-pressure side of the refrigerant compressor (11).

7. Refrigeration circuit (110; 210; 310; 610; 810) according to one of the preceding claims, wherein a bypass line (30; 32) with a bypass valve (31; 33) is provided, which connects a high-pressure side of the refrigerant compressor (11) to a low-pressure side of the refrigerant compressor (11) and which bypasses at least the chiller (15) and the evaporator (14), wherein the bypass valve (31; 33) is adapted to at least block and release a flow through.

8. Thermal management system comprising a refrigeration circuit (10; 110; 210; 310; 410; 510; 610; 710; 810; 910) according to one of claims 1 to 7, a cooling circuit (28) and an air conditioning unit (27).

9. Motor vehicle comprising a refrigeration circuit (10; 110; 210; 310; 410; 510; 610; 710; 810; 910) according to one of claims 1 to 7 or a thermal management system according to claim 8.

10. Method for controlling a refrigeration circuit (10; 110; 210; 310; 410; 510; 610; 710; 810; 910) according to one of claims 1 to 7, wherein the refrigeration circuit is operated in an operating state, in which the valve circuit blocks a flow through the main circuit (24) and releases a flow through the return line (29; 34; 35; 36; 37), such that a heat dissipation from the refrigeration circuit via the heating condenser (12) and the condenser (13) is prevented.

11. Method for controlling a refrigeration circuit (10; 110; 210; 310; 410; 510; 610; 710; 810; 910) according to one of claims 1 to 7, wherein the refrigeration circuit is operated in an operating state, in which the valve circuit releases a flow through the main circuit (24) and releases a flow through the return line (29; 34; 35; 36; 37).

12. Method according to claim 11, wherein a flow through the main circuit (24) is adjusted via the valve circuit as a function of a heating power demand in a vehicle passenger compartment.

13. Method according to claim 11 or 12, wherein the refrigeration circuit comprises a chiller valve (21) arranged upstream of the chiller (15) and an evaporator valve (20) arranged upstream of the evaporator (14), which are adapted to block and release a flow through, wherein the refrigeration circuit (10; 110; 210; 310; 410; 510; 610; 710; 810; 910) is operated in an operating state, in which a pressure level on the low-pressure side (25) of the refrigerant compressor (11) is adjusted via a control of the valve circuit, the evaporator valve (20), the chiller valve (21) and the refrigerant compressor (11), such that the refrigerant compressor (11) is operated at its maximum continuous power.

## Revendications

1. Circuit frigorifique (10; 110; 210; 310; 410; 510; 610; 710; 810; 910), en particulier pour un véhicule automobile, comprenant
un compresseur de réfrigérant (11),
un condenseur (13) pour un transfert de chaleur avec un circuit de refroidissement (28) ;
un chiller (15) pour un transfert de chaleur avec le circuit de refroidissement (28) ;
un évaporateur (14) pour tempérer de l'air dans un appareil de climatisation (27), dans lequel l'évaporateur (14) est disposé en parallèle du chiller (15), dans lequel, dans un circuit principal (24), le compresseur de réfrigérant (11), le condenseur (13) et le montage en parallèle du chiller (15) et de l'évaporateur (14) sont connectés en série ;
une conduite de retour (29; 34; 35; 36; 37), qui se dérive du circuit principal (24) sur un côté haute pression du compresseur de réfrigérant (11) et débouche dans le circuit principal (24) sur un côté basse pression du compresseur de réfrigérant (11),
un circuit de vannes, qui est adapté pour au moins bloquer et libérer un écoulement à travers la conduite de retour (29; 34; 35; 36; 37), et **caractérisé par**
un condenseur de chauffage (12) pour tempérer de l'air dans l'appareil de climatisation (27), dans lequel, dans le circuit principal (24), le compresseur de réfrigérant (11), le condenseur de chauffage (12), le condenseur (13) et le montage en parallèle du chiller (15) et de l'évaporateur (14) sont connectés en série.

2. Circuit frigorifique (10; 110; 210; 310; 410; 510; 610; 710; 810; 910) selon la revendication 1, dans lequel le circuit de vannes est adapté pour au moins bloquer et libérer un écoulement à travers le circuit principal (24).

3. Circuit frigorifique (10; 110; 210; 310; 410; 510; 610; 710; 810; 910) selon l'une des revendications précédentes, dans lequel
le circuit de vannes comprend une vanne, qui est disposée au niveau de la dérivation de la conduite de retour (29; 34; 35; 36; 37) par rapport au circuit principal (24), ou
le circuit de vannes comprend une première vanne (18), qui est disposée dans le circuit principal (24), en aval de la dérivation de la conduite de retour (29; 34; 35; 36; 37), et qui est adaptée pour au moins bloquer et libérer un écoulement à travers le circuit principal (24), et comprend une deuxième vanne (19), qui est disposée dans la conduite de retour (29; 34; 35; 36; 37) et qui est adaptée pour au moins bloquer et libérer un écoulement à travers la conduite de retour (29; 34; 35; 36; 37).

4. Circuit frigorifique (10; 110; 210; 310; 410; 510; 610; 710; 810; 910) selon l'une des revendications précédentes, comprenant une vanne de chiller (21), qui est disposée en amont du chiller (15) et qui est adaptée pour bloquer et libérer un écoulement.

5. Circuit frigorifique (10; 110; 210; 310; 410; 510; 610; 710; 810; 910) selon l'une des revendications précédentes, comprenant une vanne d'évaporateur (20), qui est disposée en amont de l'évaporateur (14) et qui est adaptée pour bloquer et libérer un écoulement.

6. Circuit frigorifique (10; 110; 210; 310; 410; 510; 610; 710; 810; 910) selon l'une des revendications précédentes, comprenant un échangeur de chaleur interne (17), qui relie le côté haute pression du compresseur de réfrigérant (11), d'une manière à transférer la chaleur et d'une manière séparée sur le plan fluidique, au côté basse pression du compresseur de réfrigérant (11).

7. Circuit frigorifique (110; 210; 310; 610; 810) selon l'une des revendications précédentes, dans lequel une conduite de dérivation (30; 32) avec une vanne de dérivation (31; 33) est prévue, qui relie un côté haute pression du compresseur de réfrigérant (11) à un côté basse pression du compresseur de réfrigérant (11) et qui contourne au moins le chiller (15) et l'évaporateur (14), dans lequel la vanne de dérivation (31; 33) est adaptée pour au moins bloquer et libérer un écoulement.

8. Système de gestion thermique comprenant un circuit frigorifique (10; 110; 210; 310; 410; 510; 610; 710; 810; 910) selon l'une des revendications 1 à 7, un circuit de refroidissement (28) et un appareil de climatisation (27).

9. Véhicule automobile comprenant un circuit frigorifique (10; 110; 210; 310; 410; 510; 610; 710; 810; 910) selon l'une des revendications 1 à 7 ou un système de gestion thermique selon la revendication 8.

10. Procédé de commande d'un circuit frigorifique (10; 110; 210; 310; 410; 510; 610; 710; 810; 910) selon l'une des revendications 1 à 7, dans lequel le circuit frigorifique est exploité dans un état de fonctionnement, dans lequel le circuit de vannes bloque un écoulement à travers le circuit principal (24) et libère un écoulement à travers la conduite de retour (29; 34; 35; 36; 37), de sorte qu'une évacuation de chaleur du circuit frigorifique par l'intermédiaire du condenseur de chauffage (12) et du condenseur (13) est empêchée.

11. Procédé de commande d'un circuit frigorifique (10; 110; 210; 310; 410; 510; 610; 710; 810; 910) selon l'une des revendications 1 à 7, dans lequel le circuit frigorifique est exploité dans un état de fonctionnement, dans lequel le circuit de vannes libère un écoulement à travers le circuit principal (24) et libère un écoulement à travers la conduite de retour (29; 34; 35; 36; 37).

12. Procédé selon la revendication 11, dans lequel un écoulement à travers le circuit principal (24) est réglé par l'intermédiaire du circuit de vannes en fonction d'un besoin en puissance de chauffage dans un habitacle du véhicule.

13. Procédé selon la revendication 11 ou 12, dans lequel le circuit frigorifique comprend une vanne de chiller (21) disposée en amont du chiller (15) et une vanne d'évaporateur (20) disposée en amont de l'évaporateur (14), qui sont adaptées pour bloquer et libérer un écoulement, dans lequel le circuit frigorifique (10; 110; 210; 310; 410; 510; 610; 710; 810; 910) est exploité dans un état de fonctionnement, dans lequel un niveau de pression sur le côté basse pression (25) du compresseur de réfrigérant (11) est réglé par l'intermédiaire d'une commande du circuit de vannes, de la vanne d'évaporateur (20), de la vanne de chiller (21) et du compresseur de réfrigérant (11), de telle sorte que le compresseur de réfrigérant (11) est exploité à sa puissance continue maximale.
